(19) Europäisches Patentamt / European Patent Office / Office européen des brevets

(11) **EP 4 361 700 A1**

(12) **EUROPEAN PATENT APPLICATION**
published in accordance with Art. 153(4) EPC

(43) Date of publication:
**01.05.2024 Bulletin 2024/18**

(21) Application number: **23764818.3**

(22) Date of filing: **13.09.2023**

(51) International Patent Classification (IPC):
**G02B 13/00** (2006.01)    **G02B 7/02** (2021.01)

(86) International application number:
**PCT/KR2023/013705**

(87) International publication number:
**WO 2024/058541 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.09.2022 KR 20220115190**
            **10.11.2022 KR 20220149965**

(71) Applicant: **Samsung Electronics Co., Ltd.
Suwon-si, Gyeonggi-do 16677 (KR)**

(72) Inventors:
- **KIM, Hyunjea**
  **Suwon-si, Gyeonggi-do 16677 (KR)**
- **KIM, Soojung**
  **Suwon-si, Gyeonggi-do 16677 (KR)**
- **BAE, Jaecheol**
  **Suwon-si, Gyeonggi-do 16677 (KR)**

(74) Representative: **HGF
HGF Limited
1 City Walk
Leeds LS11 9DX (GB)**

(54) **LENS ASSEMBLY AND ELECTRONIC DEVICE COMPRISING SAME**

(57) According to an embodiment of the disclosure, an optical device may include a lens assembly having multiple lenses aligned along an optical axis direction from an object-side toward an image-side, and a lens barrel configured to at least partially surround the lens assembly. Among the multiple lenses included the lens assembly, at least one of lenses positioned between the first lens and the last lens from the object-side may be configured such that a ratio of a height from a starting point of a non-effective diameter of the lens to a starting point of a seat surface of the lens, and a distance from the starting point of the non-effective diameter to a portion of the lens in contact with the inner surface (the outer diameter) of the barrel exceeds 0.5. \

The lens assembly may be various according to an embodiment. In addition, a lens assembly and an electronic device including the same according to the embodiment may be provided.

FIG. 4

**Description**

[Technical Field]

An embodiment of the disclosure relates to, for example, a lens assembly and an electronic device including the same.

[Background Art]

Optical devices, for example, cameras capable of capturing images or videos, have been widely used. Conventionally, film-type optical devices have been dominant, but video cameras or digital cameras having solid-state image sensors, such as charge coupled devices (CCD) or complementary metal-oxide semiconductors (CMOS), have recently been widespread. Optical devices equipped with solid-state image sensors (CCD or CMOS) can easily store, replicate, and move images, compared with film-type optical devices, and thus are gradually replacing film-type optical devices.

In order to acquire high-quality images and/or videos, an optical device may include an optical system including a lens assembly including multiple lenses and an image sensor having a large number of pixels. The lens assembly may have, for example, a low F-number (F-no) and a small aberration such that high-quality (high-resolution) images and/or videos can be acquired. In order to obtain a low F-number (F-no) and a small aberration, in order words, to acquire a high resolution and a bright image, multiple lenses need to be combined.

An optical device may include the lens assembly, film masks disposed between lenses as auxiliary members combined with the lens assembly, and spacers for supporting at least parts of the lenses. In addition, the optical device may include a lens barrel configured to surround at least parts of the lenses, the film masks, and/or the spacers such that they are seated thereon. The lens assembly and the auxiliary members may be provided through an optical design process for satisfying the interior/exterior quality of the optical device, the performance of the optical device, and/or molding processability.

The above-described information may be provided as a related art in order to help understanding of the disclosure. No claim or determination is raised in connection with whether any of the above description is applicable as a prior art related to the disclosure.

[Detailed Description of the Invention]

[Technical Solution]

According to an embodiment of the disclosure, an optical device is provided. An optical device may include a lens barrel, and a lens assembly having multiple lenses aligned along an optical axis direction from an object-side toward an image-side, wherein at least one of the multiple lenses included in the lens assembly may satisfy [Formula 1] below.

$$[\text{Formula 1}]$$

$$H1/H2 > 0.5.$$

In the [Formula 1], H1 indicates a height from a starting point of a non-effective diameter to a starting point of a seat surface, and H2 indicates a height from the starting point of the non-effective diameter to a portion in contact with the inner surface of the lens barrel.

According to an embodiment of the disclosure, an optical device is provided. An optical device may include a lens barrel, and a lens assembly having multiple lenses aligned along an optical axis direction from an object-side toward an image-side, wherein at least one of the multiple lenses included in the lens assembly may satisfy [Formula 2] below.

$$[\text{Formula 2}]$$

$$H2/D1 \geq 0.23.$$

In the [Formula 2], H2 indicates a height from a starting point of a non-effective diameter to a portion in contact with the inner surface of the lens barrel, and D1 indicates a depth from the starting point of the non-effective diameter to a starting point of a seat surface of the lens.

According to an embodiment of the disclosure, an optical device is provided. An electronic device may include a lens barrel, and a lens assembly having multiple lenses aligned along an optical axis direction from an object-side toward an image-side, wherein at least one of the multiple lenses included in the lens assembly may satisfy [Formula

3] below.

[Formula 3]

$$D3/D2 > 1.65.$$

In the [Formula 3], D2 indicates a thickness between a starting point of a non-effective diameter and a seat surface of the lens, and D3 indicates a thickness between a first seat surface of an object-side surface of the lens and a second seat surface of an image-side surface of the lens.

[Brief Description of Drawings]

In relation to an embodiment of the disclosure, aspects described above or other aspects, and configurations and/or advantages thereof may become clearer through the following detailed descriptions with reference to the accompanying drawings.

FIG. 1 is a view showing a lens assembly according to some embodiments.
FIG. 2 is a view showing a lens assembly according to an embodiment of the disclosure.
FIG. 3 is a view showing a lens assembly according to an embodiment of the disclosure.
FIG. 4 is a view showing a lens assembly satisfying a first formula according to an embodiment of the disclosure.
FIG. 5 is a view showing a lens assembly satisfying a second formula according to an embodiment of the disclosure.
FIG. 6 is a view showing a lens assembly satisfying a third formula according to an embodiment of the disclosure.
FIG. 7 is a block diagram of an electronic device in a network environment according to various embodiments of the disclosure.

[Mode for Carrying out the Invention]

Recently, due to the rise in the price of subsidiary materials, the issue of cost reduction has emerged, and it is now being considered to, while maintaining the quality, remove subsidiary materials, for example, a spacer, in order to reduce the price. However, the spacer functions to adjust the amount of light through ray-cuts as well as supporting at least a part of a lens. Therefore, removal of the spacer may cause a flare and thus degrade the product quality thereof.
Accordingly, various embodiments of the disclosure are intended to provide a lens assembly capable of preventing and/or reducing a flare even though a spacer is removed, and an optical and/or electronic device including same.
Hereinafter, various embodiments of the disclosure will be described with reference to the accompanying drawings.
For example, an electronic device 1 according to an embodiment of the disclosure may include at least one of a smartphone, a tablet PC, a mobile phone, a video phone, an e-book reader, a desktop PC, a laptop PC, a netbook computer, a workstation, a server, a PDA, a portable multimedia player (PMP), an MP3 player, a medical device, a camera, or a wearable device. A wearable device may include at least one of an accessory type (e.g., a watch, a ring, a bracelet, an anklet, a necklace, glasses, contact lenses, or a head-mounted device (HMD)), textile or clothing integrated type (e.g., an electronic clothing), a body-worn type (e.g., a skin pad or tattoos), or a bio-implantable circuit. In some embodiments, for example, an electronic device may include at least one of a television, a digital video disk (DVD) player, an audio, a refrigerator, an air conditioner, a cleaner, an oven, a microwave oven, a washing machine, an air cleaner, a set-top box, a home automation control panel, a security control panel, a media box (e.g., Samsung Home-Sync™, Apple TV™, or Google TV™), a game console (e.g., an Xbox™ or a PlayStation™), an electronic dictionary, an electronic key, a camcorder, or an electronic photo frame.
In an embodiment, the electronic device 1 may include at least one of various types of medical devices (e.g., various types of portable medical measuring devices (a blood glucose monitoring device, a heart rate monitoring device, a blood pressure measuring device, a body temperature measuring device, etc.), a magnetic resonance angiography (MRA) machine, a magnetic resonance imaging (MRI) machine, a computed tomography (CT) machine, or an ultrasonic machine, etc.), a navigation device, a global navigation satellite system (GNSS), an event data recorder (EDR), a flight data recorder (FDR), a vehicle infotainment device, an electronic device for a ship (e.g., a navigation device for a ship, a gyro-compass, etc.), avionics, a security device, an automotive head unit, a robot for home or industry, a drone, an automatic teller's machine (ATM) in banks, point of sales (POS) system in a shop, or internet device of things (e.g., a light bulb, various types of sensors, a sprinkler device, a fire alarm, a thermostat, a streetlamp, a toaster, sporting goods, a hot water tank, a heater, a boiler, etc.). According to an embodiment, an electronic device may include at least one of a part of furniture or a building/structure, an electronic board, an electronic signature receiving device, a projector, or various types of measuring instruments (e.g., a water meter, an electric meter, a gas meter, and a radio wave meter, etc.). In various embodiments, an electronic device may be flexible or may be a combination of two or more of the various devices described above. The electronic device 1 according to various embodiments of the disclosure is not limited to the above-mentioned devices. In various embodiments of the disclosure, the term "user" may be referred to as a person using an electronic device or a device (e.g., an artificial intelligence electronic device) using an electronic device. An electronic device according to an embodiment of the disclosure is not limited to the above-mentioned devices.

According to an embodiment, as a representative example of the electronic device 1, an optical device (e.g., a camera module) may be included therein, and the following descriptions may be based on the premise that a lens assembly 10 is included in the optical device as an embodiment.

In describing an embodiment of the disclosure, some numerical values may be presented, but it should be noted that the numerical values do not limit an embodiment of the disclosure unless set forth in the claims.

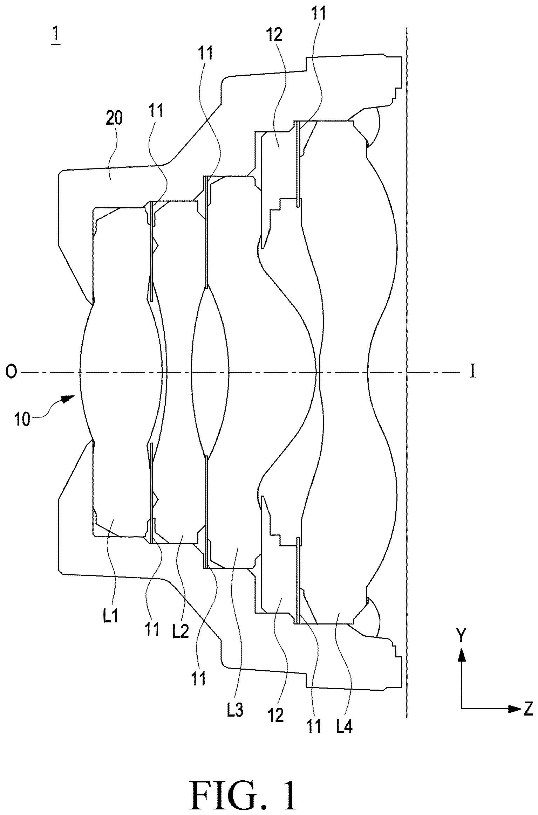

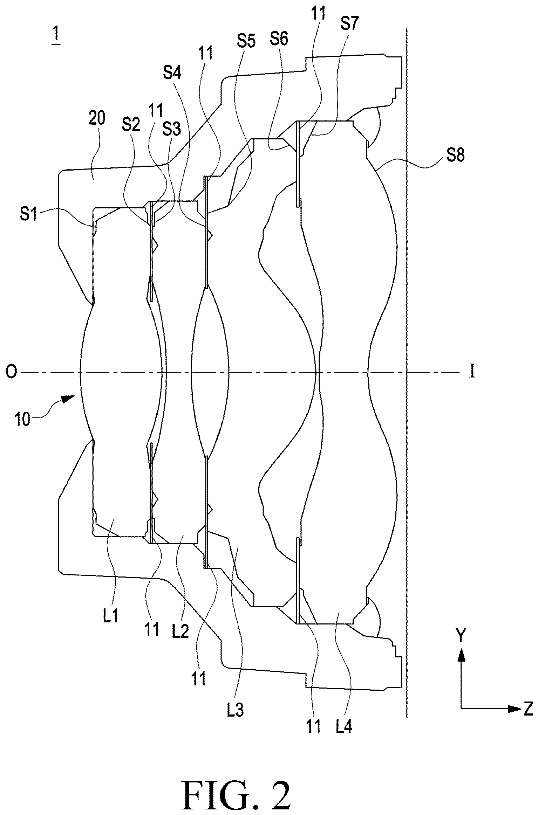

FIG. 1 is a view showing a lens assembly according to some embodiments (a comparative embodiment). FIG. 2 is a view showing a lens assembly according to an embodiment of the disclosure.

Referring to FIG. 1 and FIG. 2, the lens assembly 10 of the disclosure may include multiple lenses (e.g., L1, L2, L3, and L4) and an image sensor (not shown).

According to an embodiment, the image sensor (not shown) may be mounted on the electronic device 1. An optical device comprising the lens assembly 10 including the multiple lenses (e.g., L1, L2, L3, and L4) may be mounted to the electronic device 1 on which the image sensor is mounted. For example, in describing an embodiment of the disclosure, the image sensor (not shown) may be omitted. The image sensor (not shown) may be used by being mounted on the electronic device 1 to which the lens assembly 10 is mounted. According to an embodiment, the image sensor (not shown) may be a sensor mounted on a circuit board (not shown) or the like and disposed in a state of being aligned on an optical axis O-I, and may react to light. For example, the image sensor (not shown) may include a sensor such as a complementary metal-oxide semiconductor (CMOS) image sensor or a charge coupled device (CCD). The image sensor is not limited thereto, and for example, may include various devices for converting an object image into an electrical video signal. The image sensor may detect contrast information, gradation ratio information, color information, etc. of an object from light passing through the multiple lenses (e.g., L1, L2, L3, and L4) to obtain an image of the object.

According to an embodiment, the lens assembly 10 may have the optical axis O-I from the side of an object (or external object) O toward the side of an image I. Hereinafter, in describing the configuration of each of the lenses, for example, the object-side may indicate a direction in which an object is positioned, and the image-side may indicate a direction in which an imaging surface, on which an image is formed, is positioned. In addition, for example, "a surface" of a lens, which faces the object-side, may be a surface of the side at which the object O is positioned with reference to the optical axis O-I, and may mean the left surface (or the front surface) of the lens in the drawings according to an embodiment of the disclosure. In addition, "a surface" of a lens, which faces the image-side, may be a surface of the side, at which the imaging surface for the image I is positioned with reference to the optical axis O-I, and may mean the right surface (or the rear surface) of the lens in the drawings. Here, for example, the imaging surface for the image I may be a portion on which an image-capture device or an image sensor is disposed to form an image.

With reference to at least one lens among the multiple lenses included in the lens assembly 10, seeing the side of the object O along the optical axis O-I may be defined as facing a first direction, and seeing the side of the image I along the optical axis O-I may be defined as facing a second direction. According to an embodiment, in case that a lens (e.g., the first lens L1) includes a surface facing the side of the object O, the surface facing the side of the object O may be said to face the first direction. In addition, in case that a lens (e.g., the first lens L1) includes a surface facing the side of the image I, the surface facing the image-side may be said to face the second direction. That is, a lens may have a surface intended to face the object O when the lens is included in the optical device, and a surface intended to face the image I when the lens is included in the optical device. Similarly, the lens assembly 10 may include multiple lenses arranged such that each of the lens surfaces intended to face the object O face a first direction, and such that each of the lens surfaces intended to face the image face a second direction.

The multiple lenses (e.g., L1, L2, L3, and L4) and the image sensor may be arranged in a state of being aligned on the optical axis O-I. Here, that multiple lenses are "aligned on the optical axis O-I" may mean that the centers of the multiple lenses are positioned on the optical axis O-I in a state where the lenses are oriented in the first direction or the second direction. Referring to FIG. 1 and FIG. 2, it is illustrated that four lenses are aligned on the optical axis O-I. However, it is merely one embodiment, and does not limit the scope of the disclosure. The lens assembly 10 of the disclosure may include at least three lenses. In the following drawings, although the lens assembly 10 including four lenses is mainly described, it should be noted that the lens assembly may also include three lenses or five or more lenses, differently from the illustrated drawings.

Referring to FIG. 1 and FIG. 2, for example, the lens assembly 10 according to an embodiment may include the multiple lenses (e.g., L1, L2, L3, and L4), which are sequentially arranged in the direction (e.g., the direction from the side of the object O to the side of the image I in FIG. 1) of the optical axis O-I and include a first lens L1, a second lens L2, a third lens L3, and a fourth lens L4. According to an embodiment, the first lens L1 may include a surface S1 facing the object-side and a surface S2 facing the image-side, and a part of the surface S1 facing the object-side may be exposed to the outside through an opening of a lens barrel 20. The second lens L2 may include a surface S3 facing the object-side and a surface S4 facing the image-side. The third lens L3 may include a surface S5 facing the object-side and a surface S6 facing the image-side. The fourth lens L4 may include a surface S7 facing the object-side and a surface S8 facing the image-side.

In describing the multiple lenses (e.g., L1, L2, L3, and L4) according to an embodiment, hereinafter, in portions of each of the lenses, a portion close to the optical axis O-I may be referred to as a "chief portion", and a portion far away from the optical axis O-I (or near the edge of the lens) may be referred to as a "marginal portion". For example, the chief portion of the first lens L1 may be a portion which intersects the optical axis O-I. For example, the marginal portion of the first lens L1 may be a portion spaced apart from the optical axis by a predetermined distance. For example, the marginal portion may include the end portion of the lens, which is farthest from the optical axis O-I of the lens.

According to an embodiment, the optical device and/or electronic device 1 may further include a film mask 11 on the marginal portion of the lens. The film mask 11 may function as an aperture stop (determines F-number (F-no) as an entrance pupil) or a field stop (adjusts the size of the ambient light flux to adjust an ambient light amount ratio and/or aberration) for adjusting the amount of light entering a lens. For example, the marginal portion of the surface S2, which faces the image-side, of the first lens L1, and the marginal portion of the surface S3, which faces the object-side, of the second lens L2, may face each other, and the film mask 11 may be disposed between the marginal portion of the surface S2, which faces the image-side, of the first lens L1, and the marginal portion of the surface S3, which faces the object-side, of the second lens L2. The marginal portion of the surface S4, which faces the image-side, of the second lens L2, and the marginal portion of the surface S5, which faces the object-side, of the third lens L3, may face each other, and the film mask 11 may be disposed between the marginal portion of the surface S4, which faces the image-side, of the second lens L2, and the marginal portion of the surface S5, which faces the object-side, of the third lens L3. In addition, the marginal portion of the surface S6, which faces the image-side, of the third lens L3, and the marginal portion of the surface S7, which faces the object-side, of the fourth lens L4, may face each other, and the film mask 11 may also be disposed between the marginal portion of the surface S6, which faces the image-side, of the third lens L3, and the marginal portion of the surface S7, which faces the object-side, of the fourth lens L4. In some embodiments, the film mask 11 may not be included.

The optical device may include a lens barrel 20. The lens barrel 20 may be formed to at least partially surround the lens assembly 10. The lens barrel 20 may be formed to at least partially surround the lens assembly 10 and the film mask 11. The lens barrel 20 may function to stably seat the lens assembly 10 and (optionally) the film mask 11, block external light, prevent damage thereof at the time of falling of the electronic device 1, and prevent an inflow of foreign substances thereinto.

Meanwhile, referring to FIG. 1, the electronic device 1 according to the comparative embodiment may further include a spacer 12. The spacer 12 may function to support the lenses. The spacer 12 may be disposed between the marginal portion of a lens and the marginal portion of another adjacent lens. The spacer 12 may function to prevent the bending of the lenses and also adjust a light amount. FIG. 1 illustrates that the spacer 12 is disposed between the third lens L3 and the fourth lens L4. However, the spacer 12 may include a hard metallic material to maintain the stability between a surface and a surface of the lenses. Therefore, the spacer may have a considerable weight and may also have a considerable thickness. In order to achieve miniaturization and/or lightening of weight of an electronic device including a lens assembly, the removal of the spacer 12 may be considered. Accordingly, in the disclosure, as illustrated in FIG. 2, the lens assembly 10, from which spacers are removed, may be provided.

According to an embodiment of the disclosure, the lens assembly 10, from which spacers are removed, may be provided, and also the lens assembly 10 may be provided to prevent and/or reduce a flare which does not occur in case that the spacer 12 is present, but may occur as the spacer 12 is removed. That is, while the spacer 12 may be removed to miniaturize and/or reduce the weight of the lens assembly 10, the removal of the spacer 12 may introduce or increase flare. To this end, (i.e. to allow removal of the spacer while preventing/minimizing flare) the electronic device 1 according to an embodiment of the disclosure may include at least one lens including a rib.

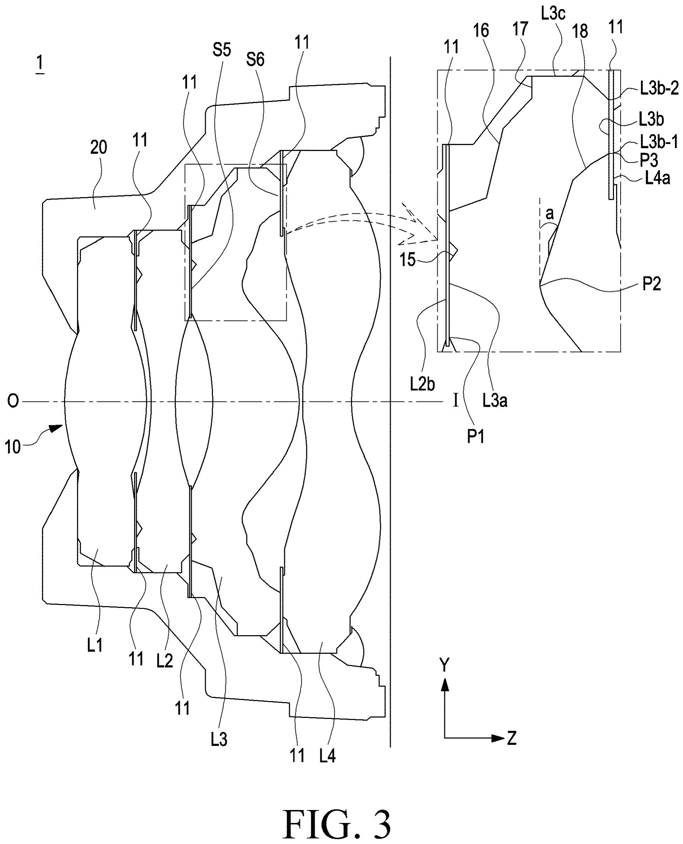

FIG. 3 is a view showing a lens assembly according to an embodiment of the disclosure. FIG. 3 includes an enlarged view of a rib formed to prevent a flare of a lens 10 included in a lens assembly 10 according to an embodiment of the disclosure.

By replacing spacers, a flare, which may occur in a lens assembly, may be caused by various causes. For example, if a spacer is replaced by including a rib structure in a lens, there may be a flare caused by light reflected within the effective diameter of a lens and then reflected onto the non-effective diameter (e.g., the rib) thereof. A flare may also be caused by light refracted and reflected after passing through a lens, a flare caused by light totally reflected inside a lens, and a flare caused by light leakage between a lens and a lens.

In FIG. 3 and the drawings therebelow, in connection with a lens including a rib structure (which can be briefly referred to as a "rib" below) to prevent and/or reduce the above-mentioned flare, although a lens of the lens assembly 10 including 4 lenses, which is third from the side of the object O, that is, the third lens L3 is explained as an example, it should be noted that the scope of the disclosure is not limited thereto. Among the multiple lenses included in the lens assembly 10, a lens including a rib for preventing and/or reducing the flare may be a lens disposed between a first lens (e.g., the first lens L1) closest to the object-side and the last lens (e.g., the fourth lens L4) farthest from the object-side. For example, in FIG. 3 and the drawings therebelow, a rib for preventing and/or reducing a flare may be formed on not only the third lens L3 but also the second lens L2. In an embodiment, ribs for preventing and/or reducing a flare may be formed on both the second lens L2 and the third lens L3. In the disclosure, in case that the lens assembly includes three lenses, a rib for preventing and/or reducing a flare may be formed on a lens which is second from the object-side, that is, the second lens L2. In case that the lens assembly includes five or more lenses, at least one of a lens which is second from the object-side, a lens which is third from the object-side, and a lens which is fourth from the object-side may correspond to a lens on which a rib can be formed. In case that the lens assembly includes six or more lenses, at least one lens of a lens which is second from the object-side, a lens which is third from the object-side, a lens which is fourth from the object-side, and a lens which is fifth from the object-side may correspond to a lens on which a rib for preventing and/or reducing a flare can be formed. In addition, even in case that the lens assembly includes seven or more lenses, multiple lenses arranged between the first lens from the object-side and the last lens from the object-side may correspond to lenses on which ribs for preventing and/or reducing a flare can be formed. Hereinafter, for the convenience of description, it will be described as an example that a rib is formed on only the third lens L3 among the four lenses.

Referring to FIG. 3, at least one (e.g., the third lens L3) of the multiple lenses included a lens assembly may include the rib having a shape extending from a starting point of the non-effective diameter thereof to a first seat surface of the surface S6, which faces the object-side of another lens (e.g., the surface S7 of the fourth lens L4) and is adjacent to the inner surface of the lens barrel 20. For example, the rib may extend from a starting point of the non-effective diameter to the inner surface of the lens barrel 20. For example, the rib may include a first seat surface corresponding to a seat surface of the next lens in the lens assembly in the first direction (e.g. the first seat surface may be part of surface S5), and a second seat surface corresponding to a seat surface of the next lens in the lens assembly in the second direction (e.g. the second seat surface may be part of surface S6). Here, the non-effective diameter of a lens may mean a portion which does not correspond to the effective diameter of the lens. The effective diameter of a lens may mean a distance in the direction perpendicular to the optical axis O-I passing through the center of a lens, which corresponds to a substantial area of the lens, through which rays pass, and the non-effective diameter of the lens may mean the remaining portions of the lens, which extend from the end portion of the effective diameter of the lens to a lens barrel. For example, the effective diameter of the lens may be the diameter of a central portion of the lens, and the non-effective diameter may be a portion of the diameter of the lens corresponding to a peripheral portion of the lens surrounding the central portion of the lens. For example, the effective diameter/central portion of the lens may be the portion of the lens that provides the optical effects of the lens (e.g. the portion through which light is intended to pass when imaging), and the non-effective diameter/peripheral portion of the lens may be a portion that is not intended to provide optical effects (e.g. a portion through which light is not intended to pass when imaging). For example, the non-effective diameter/peripheral portion of the lens may be a portion providing a structural or supporting effect, for example to allow to lens to be supported/retained in the lens assembly.

The lens L3 including the rib may include at least one structure of a groove, a protrusion, an inclined surface, a curved surface, and a step on at least one of the surface S5 facing the object-side and the surface S6 facing the image-side. For example, as illustrated in the enlarged view of FIG. 3, the third lens L3 may include a structure including a groove 15, inclined surfaces 16 and 18, and a step 17. In addition, although not illustrated in the drawing, the lens L3 including the rib may also further include a structure including a curved surface or a protrusion.

According to an embodiment, the lens L3 including the rib may also be formed such that the angle of a portion of the surface S6 facing the image-side with respect to the opposite portion of the surface S5 facing the object-side has an angle of 10 degrees or less. In this case, the point, at which the angle of the surface S6 facing the image-side with respect to the surface S5 facing the object-side is measured may be the starting point of the non-effective diameter on the surface S6. That is, the point on the diameter at which a portion of the surface S6 facing the image-side with respect to the opposite portion of the surface S5 facing the object-side has an angle of 10 degrees or less may be the boundary between the effective diameter and the non-effective diameter on the surface S6. It will be understood that although an angle between portions at (or in the vicinity of) the optical axis may also be ten degrees or less, such a point will not be the starting point of the non-effective diameter, as the portions in the vicinity of the optical axis are included in the effective diameter. That is, the lens may include a first central portion through which the optical axis passes and in which the angle of a portion of the surface S6 facing the image-side with respect to the opposite portion of the surface S5 facing the object-side has an angle of 10 degrees or less. the lens may include a second central portion, surrounding the first central portion, in which the angle of a portion of the surface S6 facing the image-side with respect to the opposite portion of the surface S5 facing the object-side has an angle of greater than 10 degrees. the lens may include a first peripheral portion, surrounding the second central portion, in which the angle of a portion of the surface S6 facing the image-side with respect to the opposite portion of the surface S5 facing the object-side has an angle of 10 degrees or less. The point on the diameter at which the second central portion ends and the first peripheral portion begins may be the start of the non-effective diameter. That is, the effective diameter may be the diameter of the central portion that includes the first central portion and the second central portion, and the non-effective diameter may be the remaining diameter outside of the central portion, including the first peripheral portion.

In the lens L3 including the rib, the starting point of the non-effective diameter may be different according to whether the surface S5 faces the object-side or the surface S6 faces the image-side. That is, the starting point of the non-effective diameter on the surface S5 may be defined differently to the starting point of the non-effective diameter on the surface S6. Referring to FIG. 3, the lens L3 including the rib may include a first seat surface L3a (or a front seat surface) corresponding to (e.g. for supporting) the second lens L2 on the surface S5 facing the object-side, and a second seat surface L3b (or a rear seat surface) corresponding to (e.g. for supporting) the fourth lens L4 on the surface S6 facing the image-side. For example, the first (front) seat surface L3a of the lens L3 may correspond to a (rear) seat surface of the second lens L2, and the second (rear) seat surface L3b may correspond to a (front) seat surface of the fourth lens L4. For example, the first seat surface L3a on the lens L3 may be parallel to a corresponding portion of the surface of second lens L2 and may be configured to be in contact with the corresponding portion of the surface of second lens L2, or to be in contact with a film mask 11 that also contacts the corresponding portion of the surface of second lens L2. For example, the second seat surface L3b on the lens L3 may be parallel to a corresponding portion of the surface of fourth lens L4 and may be configured to be in contact with the corresponding portion of the surface of fourth lens L4, or to be in contact with a film mask 11 that also contacts the corresponding portion of the surface of fourth lens L4.

The second seat surface L3b may include a starting point L3b-1 of the second seat surface L3b (i.e. the point on the diameter at which the second seat surface starts) and an end point L3b-2 of the second seat surface L3b (i.e. the point on the diameter at which the second seat surface ends). In addition, the lens L3 including the rib may include a portion L3c in contact with the inner surface of the lens barrel 20. The first seat surface L3a may face a portion (e.g., the seat surface L2b of the second lens L2) of the non-effective diameter of the second lens L2, and the second seat surface L3b may face a portion (e.g., the seat surface L4a of the fourth lens L4) of the non-effective diameter of the fourth lens L4. The lens L3 including the rib may be configured such that the distance from the optical axis O-I to the second seat surface L3b is longer than the distance from the optical axis O-I to the first seat surface L3a. The starting point of the non-effective diameter may be a first starting point P1, in the surface S5 facing the object-side, and may be a second starting point P2, in the surface S6 facing the image-side. In this case, the first starting point P1 and the second starting point P2 may be positioned at distances different from each other in a direction perpendicular to the optical axis O-I. The first starting point P1 may be the closest point to the optical axis O-I in the first seat surface L3a, and the second starting point P2 may be an intermediate point between the second seat surface L3b and the optical axis O-I. According to an embodiment, a point at which the angle of the surface S6 facing the image-side with respect to the surface S5 facing the object-side is measured as being 10 degrees or less, as described above, may correspond to the second starting point P2. The starting point L3b-1 of the second seat surface L3b may be referred to as reference numeral "P3" below. The starting point P3 of the second seat surface L3b may be formed at a position farther from the optical axis O-I than the first starting point P1 and the second starting point P2.

In addition, according to an embodiment, the lens L3 including the rib may have a coating surface formed on at least one surface of the surface S5 facing the object-side and the surface S6 facing the image-side. Here, the coating surface may correspond to an anti-reflection (AR) coating surface. By forming the coating surface, the reflectance thereof may be reduced to less than about 2%, and by performing corrosion treatment, the surface roughness thereof may be increased to scatter light. In addition, according to an embodiment, the lens L3 including the rib may have at least one surface of the surface S5 facing the object-side and the surface S6 facing the image-side, which is subjected to corrosion treatment. By performing corrosion treatment, it may be possible to spread the path of light.

According to an embodiment, the shape of the multiple lenses (e.g., L1, L2, L3, and L4) of the disclosure, the distance between the lenses, the radius of curvature thereof, the thickness thereof, the total track length (TTL) thereof, the focal length thereof, etc. may be freely configured unless specifically mentioned. Although FIG. 3 shows the lens L3 having the rib formed thereon, which is formed to have a shape in which the portion of the optical axis of the surface S5 facing the object-side is concave, and the portion of the optical axis of the surface S6 facing the image-side is convex, the shape of the lens may be changed according to the embodiment, and does not limit the scope of the various embodiments of the disclosure. The shape of the multiple lenses (e.g., L1, L2, L3, and L4) of the disclosure, the distance between the lenses, the radius of curvature thereof, the thickness thereof, the total track length (TTL) thereof, the focal length thereof, etc. may be variously designed according to optical properties (e.g., an aberration characteristic, a wide-angle characteristic, and/or a brightness characteristic) required for the lens assembly 10.

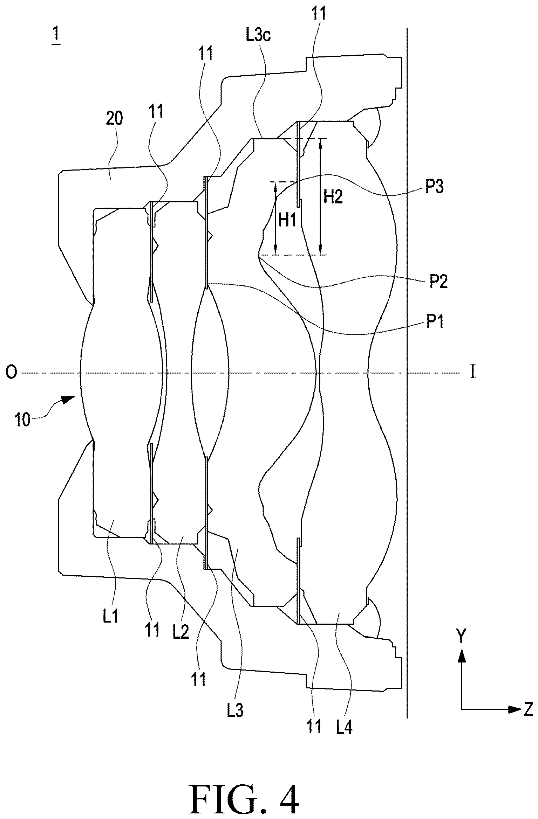

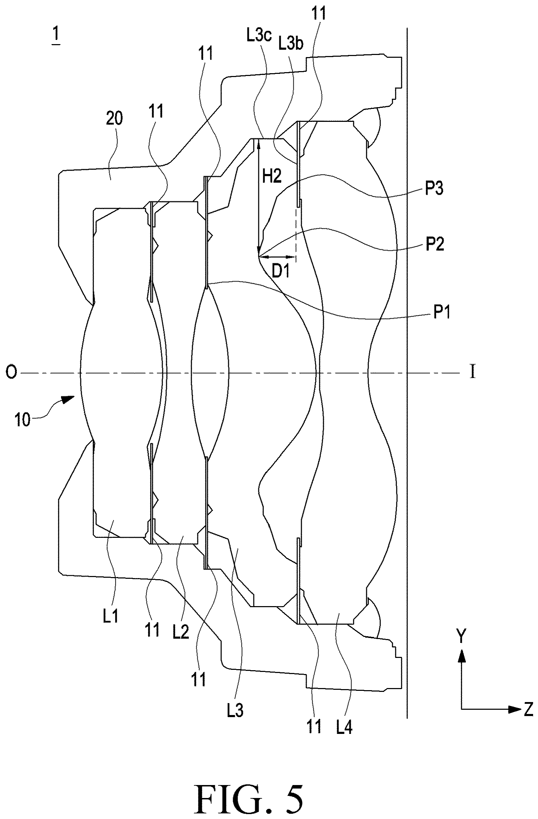

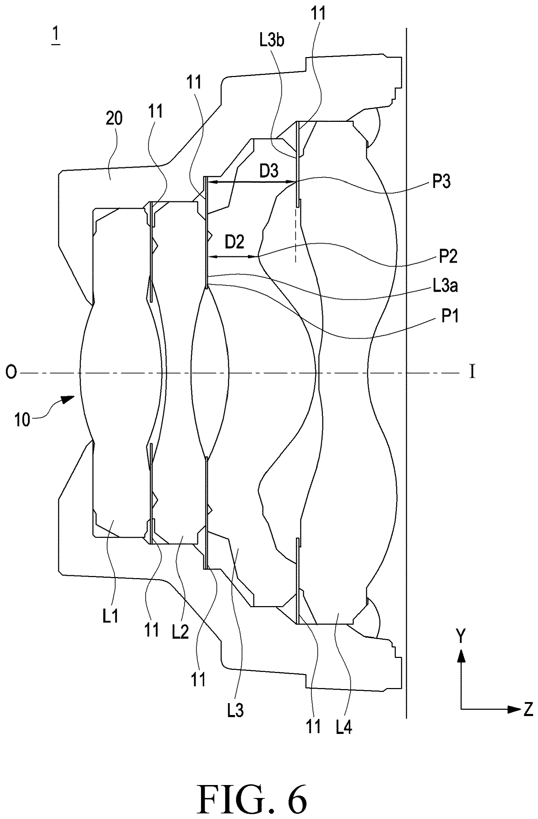

FIG. 4 is a view showing a lens assembly 10 satisfying a first formula according to an embodiment of the disclosure. FIG. 5 is a view showing a lens assembly 10 satisfying a second formula according to an embodiment of the disclosure. FIG. 6 is a view showing a lens assembly 10 satisfying a third formula according to an embodiment of the disclosure.

Referring to FIG. 4 to FIG. 6, the optical device according to an embodiment of the disclosure may provide a lens assembly capable of preventing and/or reducing a flare by satisfying at least one of [Formula 1], [Formula 2], and [Formula 3] below.

First, referring to FIG. 4, at least one of the multiple lenses included in the lens assembly, for example, the lens L3 having the rib formed thereon may satisfy [Formula 1] below.

$$[\text{Formula 1}]$$

$$H1/H2 > 0.5.$$

In the [Formula 1], H1 may indicate a height (i.e. a distance measured in a direction perpendicular to the optical axis) from the starting point of the non-effective diameter to the starting point of the seat surface, and H2 may indicate a height from the starting point of the non-effective diameter to a portion in contact with the inner surface of the lens barrel. For example, H1 may indicate a distance (measured in a direction perpendicular to the optical axis) from a line (parallel to the optical axis) passing through the starting point of the non-effective diameter to a line (parallel to the optical axis) passing through the starting point on the diameter of the seat surface. And H2 may indicate a distance (measured in a direction perpendicular to the optical axis) from a line (parallel to the optical axis) passing through the starting point of the non-effective diameter to a line (parallel to the optical axis) passing through a point on the diameter at which the lens makes contact with the inner surface of the lens barrel. Here, the starting point of the non-effective diameter may include the first starting point P1 of an object-side surface S5 of the lens L3 and a second starting point P2 of an image-side surface S6 of the lens L3, and H1 and H2 in the [Formula 1] may indicate heights measured from the second starting point P2 of the image-side surface of the lens. In addition, the seat surface may include the first seat surface L3a of the object-side surface S5 of the lens L3, and the second seat surface L3b of the image-side surface S6 of the lens L3, and H1 in the [Formula 1] may indicate a height measured to the starting point P3 of the second seat surface L3b of the image-side surface S6 of the lens L3. In connection with the [Formula 1], the optical device may include the lens L3 including the rib, in which a ratio between the height H1 measured from the starting point P2 of the non-effective diameter to the starting point P3 of the seat surface, and the height H2 from the starting point P2 of the non-effective diameter to a portion (the outer diameter of the lens) L3c, which is in contact the inner surface of the lens barrel, exceeds 0.5, and thus may prevent and/or reduce a flare.

[Table 1] below shows a ratio between the height H1 measured from the starting point P2 of the non-effective diameter to the starting point P3 of the seat surface, and the height H2 from the starting point P2 of the non-effective diameter to a portion (the outer diameter) L3c in contact with the inner surface of the lens barrel, the ratio enabling the prevention and/or reduction of a flare of the lenses according to various embodiments.

[Table 1]

| Num | Embodiment (for each model) | H1/H2 | Removal (X) or non-removal (O) of spacer |
|---|---|---|---|
| 1 | First embodiment (type1) | 0.69 | X |
| 2 | Second embodiment (type2) | 0.67 | X |
| 3 | Third embodiment (type3) | 0.68 | X |
| 4 | Fourth embodiment (type4) | 0.20 | O |
| 5 | Fifth embodiment (type5) | 0.15 | O |
| 6 | Sixth embodiment (type6) | 0.33 | O |
| 7 | Seventh embodiment (type7) | 0.29 | O |
| 8 | Eighth embodiment (type8) | 0.44 | O |
| 9 | Ninth embodiment(type9) | 0.36 | O |

As shown in [Table 1], in case of the first to the third embodiments, in a state where the spacer is removed, it is identified that the ratio between the height H1 measured from the starting point P2 of the non-effective diameter to the starting point P3 of the seat surface, and the height H2 from the starting point P2 of the non-effective diameter to a portion (the outer diameter) L3c, which is in contact with the inner surface of the lens barrel, has a value exceeding 0.5. Compared thereto, in case of the fourth to the ninth embodiments, it is identified that the spacer is required in case that the ratio between the height H1 measured from the starting point P2 of the non-effective diameter to the starting point P3 of the seat surface, and the height H2 from the starting point P2 of the non-effective diameter to a portion (the outer diameter) L3c, which is in contact with the inner surface of the lens barrel, is 0.5 or less. Referring to FIG. 5, at least one of the multiple lenses included in the lens assembly, for example, the lens L3 having the rib formed thereon may satisfy [Formula 2] below.

[Formula 2]

$$H2/D1 \geq 0.23.$$

In the [Formula 2], H2 may indicate a height from the starting point of the non-effective diameter to a portion in contact with the inner surface of the lens barrel, and D1 may indicate a depth (i.e. a distance measured in a direction parallel to the optical axis) from the starting point of the non-effective diameter to the starting point of the seat surface. For example, H2 may indicate a distance (measured in a direction perpendicular to the optical axis) from a line (parallel to the optical axis) passing through the starting point of the non-effective diameter to a line (parallel to the optical axis) passing through a point on the diameter at which the lens makes contact with the inner surface of the lens barrel. And D1 may indicate a distance (measured in a direction parallel to the optical axis) from a line (perpendicular to the optical axis) passing through the starting point of the non-effective diameter to a line (perpendicular to the optical axis) passing through the starting point on the diameter of the seat surface. Here, the starting point of the non-effective diameter may include the first starting point P1 of the object-side surface S5 of the lens L3 and a second starting P2 point of the image-side surface S6 of the lens L3, and H2 in the [Formula 2] may indicate a height measured from the second starting point P2 of the image-side surface S6 of the lens L3. In addition, the seat surface may include the first seat surface L3a of the object-side surface S5 of the lens L3 and the second seat surface L3b of the image-side surface S6 of the lens L3, and D1 in the [Formula 2] may indicate a depth measured from the starting point P2 of the non-effective diameter of the image-side surface S6 of the lens L3 to the starting point P3 of the second seat surface L3b of the image-side surface S6 of the lens L3. In connection with the [Formula 2], the optical device may include a lens including a rib, in which a ratio of a depth from the starting point P2 of the non-effective diameter to the seat surface L3b with respect to the height H2 from the starting point P2 of the non-effective diameter to a portion (the outer diameter) L3c, which is in contact with the inner surface of the lens barrel, is 0.23 or more, and thus may prevent and/or reduce a flare.

[Table 2] below shows a ratio of a depth from the starting point P2 of the non-effective diameter to the seat surface L3b with respect to the height H2 from the starting point P2 of the non-effective diameter to a portion (the outer diameter) L3c which is in contact the inner surface of the lens barrel, the ratio enabling the prevention and/or reduction of a flare of the lenses according to various embodiments.

[Table 2]

| Num | Embodiment (for each model) | H2/D1 | Removal (X) or non-removal (O) of spacer |
|---|---|---|---|
| 1 | First embodiment (type1) | 0.38 | X |
| 2 | Second embodiment (type2) | 0.40 | X |
| 3 | Third embodiment (type3) | 0.23 | X |
| 4 | Fourth embodiment (type4) | 0.20 | O |
| 5 | Fifth embodiment (type5) | 0.12 | O |
| 6 | Sixth embodiment (type6) | 0.17 | O |
| 7 | Seventh embodiment (type7) | 0.13 | O |
| 8 | Eighth embodiment (type8) | 0.13 | O |
| 9 | Ninth embodiment (type9) | 0.09 | O |

As shown in [Table 2], in case of the first to the third embodiments, in a state where the spacer is removed, it is identified that the ratio of a depth from the starting point P2 of the non-effective diameter to the seat surface L3b with respect to the height H2 from the starting point P2 of the non-effective diameter to a portion (the outer diameter) L3c, which is in contact the inner surface of the lens barrel, has a value of 0.23 or more. Compared thereto, in case of the fourth to the ninth embodiments, it is identified that the spacer is required in case that the ratio of a depth from the starting point P2 of the non-effective diameter to the seat surface L3b with respect to the height H2 from the starting point P2 of the non-effective diameter to a portion (the outer diameter) L3c, which is in contact the inner surface of the lens barrel, is less than 0.23. Referring to FIG. 6, at least one of the multiple lenses included in the lens assembly, for example, the lens L3 having the rib formed thereon may satisfy [Formula 3] below.

[Formula 3]

$$D3/D2 > 1.65.$$

In the [Formula 3], D2 may indicate a thickness (i.e. a distance measured in a direction parallel to the optical axis) between the starting point P2 of the non-effective diameter and the seat surface L3a of the lens L3, and D3 may be a thickness between the first seat surface L3a of the surface object-side S5 of the lens L3 and the second seat surface L3b of the image-side surface S6 of the lens L3. For example, D2 may indicate a distance (measured in a direction parallel to the optical axis) from a line (perpendicular to the optical axis) passing through the starting point of the non-effective diameter to a line (perpendicular to the optical axis) passing through a point on the diameter and on the seat surface. And D3 may indicate a distance (measured in a direction parallel to the optical axis) from a line (perpendicular to the optical axis) passing through a point on the diameter and on the first seat surface to a line (perpendicular to the optical axis) passing through a point on the diameter and on the second seat surface. Here, the starting point of the non-effective diameter may include the first starting point P1 of the object-side surface of the lens and the second starting point P2 of the image-side surface of the lens, and D2 and D3 in the [Formula 3] may be depths measured from the first starting point P1 of the image-side surface of the lens. In connection with the [Formula 3], the optical device may include a lens including a rib, in which the distance D3 between the lens seat surfaces is greater than the distance D2 between the end portions in the effective diameters of the lenses (the distance between the starting points P1 and P2 of the non-effective diameters in the optical axis direction), and thus may prevent and/or reduce a flare.

[Table 3] below shows a ratio of the distance D3 between the lens seat surfaces with respect to the distance D2 between the end portions in the effective diameters of the lenses (the distance between the starting points P1 and P2 of the non-effective diameters in the optical axis direction), the ratio enabling the prevention and/or reduction of a flare of the lenses according to various embodiments.

[Table 3]

| Num | Embodiment (for each model) | D3/D2 | Removal (X) or non-removal (O) of spacer |
|---|---|---|---|
| 1 | First embodiment (type1) | 1.82 | X |
| 2 | Second embodiment (type2) | 2.53 | X |
| 3 | Third embodiment (type3) | 2.60 | X |
| 4 | Fourth embodiment (type4) | 1.14 | O |
| 5 | Fifth embodiment (type5) | 1.50 | O |
| 6 | Sixth embodiment (type6) | 1.25 | O |
| 7 | Seventh embodiment (type7) | 1.14 | O |
| 8 | Eighth embodiment (type8) | 1.60 | O |
| 9 | Ninth embodiment (type9) | 1.44 | O |

As shown in [Table 3], in case of the first to the third embodiments, in a state where the spacer is removed, it is identified that the ratio between the distance D3 between the lens seat surfaces and the distance D2 between the end portions in the effective diameters of the lenses (the distance between the starting points P1 and P2 of the non-effective diameters in the optical axis direction) has a value exceeding 1.65, the ratio enabling the prevention and/or reduction of a flare of the lenses according to various embodiments. Compared thereto, in case of the fourth to the ninth embodiments, it is identified that the spacer is required in case that the ratio between the distance D3 between the lens seat surfaces and the distance D2 between the end portions in the effective diameters of the lenses (the distance between the starting points P1 and P2 of the non-effective diameters in the optical axis direction) has 1.65 or less.

According to the above-described embodiments of FIG. 4 to FIG. 6, the optical device may include a lens assembly satisfying at least one of the formulas, and thus can prevent and/or reduce a flare as if the optical device includes a spacer.

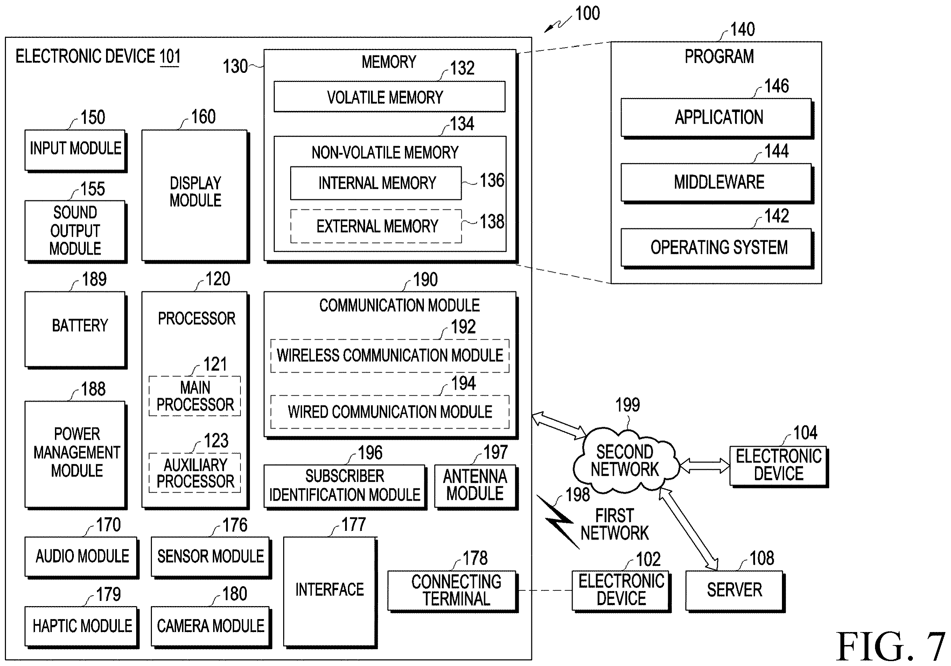

FIG. 7 is a block diagram illustrating an electronic device 101 in a network environment 100 according to various embodiments. Referring to FIG. 7, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes. The camera module may include an optical device including a lens assembly 10 and lens barrel 20 as described above.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example.

The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

According to an embodiment of the disclosure, an electronic device 1 may include a lens barrel 20, and a lens assembly 10 having multiple lenses (e.g., L1, L2, L3, and L4) aligned along an optical axis direction from an object-side toward an image-side, at least one of the multiple lenses included in the lens assembly satisfying [Formula 1] below.

$$[\text{Formula 1}]$$

$$H1/H2 > 0.5.$$

(In the [Formula 1], H1 indicates a height from a starting point of a non-effective diameter to a starting point of a seat surface of the lens, and H2 indicates a height from the starting point of the non-effective diameter to a portion in contact with the inner surface of the lens barrel.)

According to an embodiment, the starting point of the non-effective diameter may include a first starting point P1 of an object-side surface S5 of the lens L3, and a second starting point P2 of an image-side surface S6 of the lens, and H1 and H2 in the [Formula 1] may indicate heights measured from the second starting point of the image-side surface of the lens.

According to an embodiment, the seat surface may include a first seat surface L3a of the object-side surface S5 of the lens L3, and a second seat surface L3b of the image-side surface S6 of the lens, and H1 in the [Formula 1] may indicate a height measured to the second seat surface of the image-side surface of the lens.

According to an embodiment, at least one of the multiple lenses included in the lens assembly may satisfy [Formula 2] below,

$$[\text{Formula 2}]$$

$$H2/D1 \geq 0.23.$$

(In the [Formula 2], H2 indicates a height from the starting point of the non-effective diameter to a portion in contact with the inner surface of the lens barrel, and D1 indicates a depth from the starting point of the non-effective diameter to the starting point of the seat surface.)

According to an embodiment, the seat surface may include a first seat surface of the object-side surface of the lens, and a second seat surface of the image-side surface of the lens, and in [Formula 2], D1 may indicate a depth measured to the second seat surface of the image-side surface of the lens.

According to an embodiment, at least one of the multiple lenses included in the lens assembly may satisfy [Formula 3] below.

[Formula 3]

$$D3/D2 > 1.65.$$

(In the [Formula 3], D2 indicates a thickness between the starting point of the non-effective diameter and the seat surface of the lens, and D3 is a thickness between a first seat surface of the object-side surface of the lens and a second seat surface of the image-side surface of the lens.)

According to an embodiment, at least one of the multiple lenses included in the lens assembly may include a rib configured to extend from the starting point of the non-effective diameter to the first seat surface of a surface, which is adjacent to the inner surface of the lens barrel and faces the object-side of a lens.

According to an embodiment, among the multiple lenses included in the lens assembly, a lens including the rib may be a lens disposed between the first lens (e.g., L1) closest to the object-side and the last lens (e.g., L4) farthest from the object-side.

According to an embodiment, a lens including the rib may include at least one structure of a groove, a protrusion, an inclined surface, a curved surface, and a step on at least one of a surface facing the object-side and a surface facing the image-side.

According to an embodiment, a lens including the rib may be configured such that an angle of a surface facing the image-side with respect to a surface facing the object-side has an angle of 10 degrees or less.

According to an embodiment, a lens including the rib may be configured have a coating surface formed on a surface facing the object-side or a surface facing the image-side.

According to an embodiment, wherein the lens assembly may include at least three lenses.

According to an embodiment of the disclosure, an electronic device 1 may include a lens barrel 20, and a lens assembly 10 having the multiple lenses aligned along an optical axis direction from an object-side toward an image-side, at least one of the multiple lenses included in the lens assembly satisfying [Formula 2] below.

[Formula 2]

$$H2/D1 \geq 0.23.$$

(In the [Formula 2], H2 indicates a height from a starting point of a non-effective diameter to a portion in contact with the inner surface of the lens barrel, and D1 indicates a depth from the starting point of the non-effective diameter to a starting point of a seat surface of the lens.)

According to an embodiment, the seat surface may include a first seat surface of an object-side surface of the lens, and a second seat surface of an image-side surface of the lens, and D1 in [Formula 2] may indicate a depth measured to the second seat surface of the image-side surface of the lens.

According to an embodiment, at least one of the multiple lenses included in the lens assembly may satisfy [Formula 1] below.

[Formula 1]

$$H1/H2 > 0.5.$$

(In the [Formula 1], H1 indicates a height from a starting point of a non-effective diameter to a starting point of a seat surface, and H2 indicates a height from the starting point of the non-effective diameter to a portion in contact with the inner surface of the lens barrel.)

According to an embodiment, the starting point of the non-effective diameter may include a first starting point of the object-side surface of the lens, and a second starting point of the image-side surface of the lens, and H1 and H2 in the [Formula 1] may indicate heights measured from the second starting point of the image-side surface of the lens.

According to an embodiment, the seat surface may include a first seat surface of the object-side surface of the lens, and a second seat surface of the image-side surface of the lens, and H1 in [Formula 1] may indicate a depth measured to the second seat surface of the image-side surface of the lens.

According to an embodiment, at least one of the multiple lenses included in the lens assembly may satisfy [Formula 3] below.

[Formula 3]

$$D3/D2 > 1.65.$$

(In the [Formula 3], D2 indicates a thickness between the starting point of the non-effective diameter and the seat surface of the lens, and D3 is a thickness between a first seat surface of the object-side surface of the lens and a second seat surface of the image-side surface of the lens.)

According to an embodiment of the disclosure, an electronic device may include a lens barrel 20, and a lens assembly 10 having the multiple lenses aligned along an optical axis direction from an object-side toward an image-side, at least one of the multiple lenses included in the lens assembly satisfying [Formula 3] below.

[Formula 3]

$$D3/D2 > 1.65.$$

(In the [Formula 3], D2 indicates a thickness between a starting point of a non-effective diameter and a seat surface of the lens, and D3 is a thickness between a first seat surface of an object-side surface of the lens and a second seat surface of an image-side surface of the lens.)

According to an embodiment, the lens satisfying the [Formula 3] may include at least one structure of a groove, a protrusion, an inclined surface, a curved surface, and a step on at least one of a surface facing the object-side and a surface facing the image-side.

In a first example, there is provided an optical device comprising: a lens assembly having multiple lenses aligned along an optical axis direction from an object-side toward an image-side; and a lens barrel configured to at least partially surround the lens assembly, wherein at least one of the multiple lenses included in the lens assembly satisfies [Formula 1] below,

[Formula 1]

$$H1/H2 > 0.5,$$

wherein, 'H1' indicates a height from a starting point of a non-effective diameter of the lens to a starting point of a seat surface of the lens, and 'H2' indicates a height from the starting point of the non-effective diameter of the lens to a portion of the lens in contact with the inner surface of the lens barrel.

In a second example, there is provided the optical device of the first example, wherein the starting point of the non-effective diameter comprises a first starting point of an object-side surface of the lens and a second starting point of an image-side surface of the lens, and H1 and H2 in the [Formula 1] indicate heights measured from the second starting point of the image-side surface of the lens.

In a third example, there is provided the optical device of the first or second examples, wherein the seat surface comprises a first seat surface of an object-side surface of the lens and a second seat surface of an image-side surface of the lens, and H1 in the [Formula 1] indicates a height measured to the second seat surface of the image-side surface of the lens.

In a fourth example, there is provided the optical device of any preceding example, wherein at least one of the multiple lenses included in the lens assembly satisfies [Formula 2] below,

[Formula 2]

$$H2/D1 \geq 0.23,$$

wherein, 'H2' indicates a height from the starting point of the non-effective diameter of the lens to a portion in contact with the inner surface of the lens barrel, and 'D1' indicates a depth from the starting point of the non-effective diameter of the lens to the starting point of the seat surface of the lens.

In a fifth example, there is provided the optical device of the fourth example, wherein the seat surface comprises a first seat surface of the object-side surface of the lens and a second seat surface of the image-side surface of the lens, and D1 in the [Formula 2] indicates a depth measured to the second seat surface of the image-side surface of the lens.

In a sixth example, there is provided the optical device of the fourth or fifth example, wherein the at least one lens satisfying [Formula 2] is the at least one lens satisfying [Formula 1].

In a seventh example, there is provided the optical device of any preceding example, wherein at least one of the multiple lenses included in the lens assembly satisfies [Formula 3] below,

[Formula 3]

$$D3/D2 > 1.65,$$

wherein, 'D2' indicates a thickness between the starting point of the non-effective diameter of the lens and the seat surface of the lens, and 'D3' indicates a thickness between the first seat surface of the object-side surface of the lens and the second seat surface of the image-side surface of the lens.

In an eighth example, there is provided the optical device of the seventh example, wherein the at least one lens satisfying [Formula 3] is the at least one lens satisfying [Formula 1].

In a ninth example, there is provided the optical device of the seventh or eighth examples including the features of the fifth or sixth examples, wherein the at least one lens satisfying [Formula 3] is the at least one lens satisfying [Formula 2].

In a tenth example, there is provided the optical device of any preceding example, wherein the at least one lens satisfying [Formula 1] comprises a rib configured to extend from the starting point of the non-effective diameter of the lens to the first seat surface of a surface of the lens, which is adjacent to the inner surface of the lens barrel and faces the object-side of the lens.

In an eleventh example, there is provided the optical device of any preceding example, wherein among the multiple lenses included in the lens assembly, the at least one lens satisfying [Formula 1] is a lens disposed between the first lens closest to the object-side and the last lens farthest from the object-side.

In a twelfth example, there is provided the optical device of any preceding example, wherein the at least one lens satisfying [Formula 1] comprises at least one structure of a groove, a protrusion, an inclined surface, a curved surface, and a step on at least one of the surface facing the object-side and the surface facing the image-side.

In a thirteenth example, there is provided the optical device of any preceding example, wherein the at least one lens satisfying [Formula 1] is configured such that an angle of the surface facing the image-side with respect to the surface facing the object-side has an angle of 10 degrees or less.

In a fourteenth example, there is provided the optical device of any preceding example, wherein the at least one lens satisfying [Formula 1] is configured to have a coating surface formed on the surface facing the object-side or the surface facing the image-side.

In a fifteenth example, there is provided the optical device of any preceding example, wherein the lens assembly comprises at least three lenses.

In a sixteenth example, there is provided an optical device comprising: a lens assembly having multiple lenses aligned along an optical axis direction from an object-side toward an image-side; and a lens barrel configured to at least partially surround the lens assembly, wherein at least one of the multiple lenses included in the lens assembly satisfies [Formula 2] below,

[Formula 2]

$$H2/D1 \geq 0.23,$$

wherein, 'H2' indicates a height from a starting point of a non-effective diameter of the lens to a portion in contact with the inner surface of the lens barrel, and 'D1' indicates a depth from the starting point of the non-effective diameter of the lens to a starting point of a seat surface of the lens.

In a seventeenth example, there is provided the optical device of the sixteenth example, wherein the seat surface comprises a first seat surface of an object-side surface of the lens, and a second seat surface of an image-side surface of the lens, and D1 in the [Formula 2] indicates a depth measured to the second seat surface of the image-side surface of the lens.

In an eighteenth example, there is provided the optical device of the sixteenth or seventeenth examples, wherein at least one of the multiple lenses included in the lens assembly satisfies [Formula 3] below,

[Formula 3]

$$D3/D2 > 1.65,$$

wherein 'D2' indicates a thickness between the starting point of the non-effective diameter and the seat surface of the lens, and 'D3' indicates a thickness between the first seat surface of the object-side surface of the lens and the second seat surface of the image-side surface of the lens.

In a nineteenth example, there is provided the optical device of the eighteenth example, wherein the at least one lens satisfying [Formula 3] is the at least one lens satisfying [Formula 2].

In a twentieth example, there is provided the optical device of any of the sixteenth to nineteenth examples, wherein the at least one lens satisfying [Formula 2] comprises a rib configured to extend from the starting point of the non-effective diameter of the lens to the first seat surface of a surface of the lens, which is adjacent to the inner surface of the lens barrel and faces the object-side of the lens.

In a twenty-first example, there is provided the optical device of any of the sixteenth to twentieth examples, wherein among the multiple lenses included in the lens assembly, the at least one lens satisfying [Formula 2] is a lens disposed between the first lens closest to the object-side and the last lens farthest from the object-side.

In a twenty-second example, there is provided the optical device of any of the sixteenth to twenty-first examples, wherein the at least one lens satisfying [Formula 2] comprises at least one structure of a groove, a protrusion, an inclined surface, a curved surface, and a step on at least one of the surface facing the object-side and the surface facing the image-side.

In a twenty-third example, there is provided the optical device of any of the sixteenth to twenty-second examples, wherein the at least one lens satisfying [Formula 2] is configured such that an angle of the surface facing the image-side with respect to the surface facing the object-side has an angle of 10 degrees or less.

In a twenty-fourth example, there is provided the optical device of any of the sixteenth to twenty-third examples, wherein the at least one lens satisfying [Formula 2] is configured to have a coating surface formed on the surface facing the object-side or the surface facing the image-side.

In a twenty-fifth example, there is provided the optical device of any of the sixteenth to twenty-fourth examples, wherein the lens assembly comprises at least three lenses.

In a twenty-sixth example, there is provided an optical device comprising: a lens assembly having multiple lenses aligned along an optical axis direction from an object-side toward an image-side; and a lens barrel configured to at least partially surround the lens assembly, wherein at least one of the multiple lenses included in the lens assembly satisfies [Formula 3] below,

$$[\text{Formula 3}]$$

$$D3/D2 > 1.65,$$

wherein 'D2' indicates a thickness between a starting point of a non-effective diameter of the lens and a seat surface of the lens, and 'D3' indicates a thickness between a first seat surface of an object-side surface of the lens and a second seat surface of an image-side surface of the lens.

In a twenty-seventh example, there is provided the optical device of the twenty-sixth example, wherein the at least one lens satisfying [Formula 3] comprises a rib configured to extend from the starting point of the non-effective diameter of the lens to the first seat surface of a surface of the lens, which is adjacent to the inner surface of the lens barrel and faces the object-side of the lens.

In a twenty-eighth example, there is provided the optical device of the twenty-sixth or twenty-seventh example, wherein among the multiple lenses included in the lens assembly, the at least one lens satisfying [Formula 3] is a lens disposed between the first lens closest to the object-side and the last lens farthest from the object-side.

In a twenty-ninth example, there is provided the optical device of any of the twenty-sixth to twenty-eighth examples, wherein the at least one lens satisfying [Formula 3] comprises at least one structure of a groove, a protrusion, an inclined surface, a curved surface, and a step on at least one of the surface facing the object-side and the surface facing the image-side.

In a thirtieth example, there is provided the optical device of any of the twenty-sixth to twenty-ninth examples, wherein the at least one lens satisfying [Formula 3] is configured such that an angle of the surface facing the image-side with respect to the surface facing the object-side has an angle of 10 degrees or less.

In a thirty-first example, there is provided the optical device of any of the twenty-sixth to thirtieth examples, wherein the at least one lens satisfying [Formula 1] is configured to have a coating surface formed on the surface facing the object-side or the surface facing the image-side.

In a thirty-second example, there is provided the optical device of any of the twenty-sixth to thirty-first examples, wherein the lens assembly comprises at least three lenses.

In a thirty-third example, there is provided an electronic device comprising the optical device of any preceding example.

In the above descriptions, although specific embodiments are described in the detailed description of an embodiment of the disclosure, it will be obvious to a person skilled in the art that various changes are possible within the range without departing from the gist of the disclosure. For example, in the specific embodiments of the disclosure, the shape, the dimension, and/or the like of multiple lenses can be appropriately configured according to the structure, requirements, the actual use environment, and the like a lens assembly to be actually manufactured or an electronic device on which the lens assembly will be mounted.

**Claims**

1. An optical device comprising:

   a lens assembly (10) having multiple lenses aligned along an optical axis direction from an object-side toward an image-side; and
   a lens barrel (20) configured to at least partially surround the lens assembly,
   wherein at least one of the multiple lenses included in the lens assembly satisfies [Formula 1] below,

$$[\text{Formula 1}]$$

$$H1/H2 > 0.5,$$

   wherein, 'H1' indicates a height from a starting point of a non-effective diameter of the lens to a starting point of a seat surface of the lens, and 'H2' indicates a height from the starting point of the non-effective diameter of the lens to a portion of the lens in contact with the inner surface of the lens barrel.

2. The optical device of claim 1, wherein the starting point of the non-effective diameter comprises a first starting point of an object-side surface of the lens and a second starting point of an image-side surface of the lens, and H1 and H2 in the [Formula 1] indicate heights measured from the second starting point of the image-side surface of the lens.

3. The optical device of claim 1 or 2, wherein the seat surface comprises a first seat surface of an object-side surface of the lens and a second seat surface of an image-side surface of the lens, and H1 in the [Formula 1] indicates a height measured to the second seat surface of the image-side surface of the lens.

4. The optical device of any one of claims 1 to 3, wherein at least one of the multiple lenses included in the lens assembly satisfies [Formula 2] below,

$$[\text{Formula 2}]$$

$$H2/D1 \geq 0.23,$$

   wherein, 'H2' indicates a height from the starting point of the non-effective diameter of the lens to a portion of the lens in contact with the inner surface of the lens barrel, and 'D1' indicates a depth from the starting point of the non-effective diameter of the lens to the starting point of the seat surface of the lens.

5. The optical device of claim 4, wherein the seat surface comprises a first seat surface of the object-side surface of the lens and a second seat surface of the image-side surface of the lens, and D1 in the [Formula 2] indicates a depth measured to the second seat surface of the image-side surface of the lens.

6. The optical device of any one of claims 1 to 5, wherein at least one of the multiple lenses included in the lens assembly satisfies [Formula 3] below,

$$[\text{Formula 3}]$$

$$D3/D2 > 1.65,$$

   wherein, 'D2' indicates a thickness between the starting point of the non-effective diameter of the lens and the seat surface of the lens, and 'D3' indicates a thickness between the first seat surface of the object-side surface of the lens and the second seat surface of the image-side surface of the lens.

7. The optical device of any one of claims 1 to 6, wherein the at least one lens satisfying [Formula 1] comprises a rib configured to extend from the starting point of the non-effective diameter of the lens to the first seat surface of a surface of the lens, which is adjacent to the inner surface of the lens barrel and faces the object-side of the lens.

8. The optical device of any one of claims 1 to 7, wherein among the multiple lenses included in the lens assembly, the at least one lens satisfying [Formula 1] is a lens disposed between the first lens closest to the object-side and the last lens farthest from the object-side.

9. The optical device of any one of claims 1 to 8, wherein the at least one lens satisfying [Formula 1] comprises at least one structure of a groove, a protrusion, an inclined surface, a curved surface, and a step on at least one of the surface facing the object-side and the surface facing the image-side.

10. The optical device of any one of claims 1 to 9, wherein the at least one lens satisfying [Formula 1] is configured such that an angle of the surface facing the image-side with respect to the surface facing the object-side has an angle of 10 degrees or less.

11. The optical device of any one of claims 1 to 10, wherein the at least one lens satisfying [Formula 1] is configured to have a coating surface formed on the surface facing the object-side or the surface facing the image-side.

12. The optical device of any one of claims 1 to 11, wherein the lens assembly comprises at least three lenses.

13. An optical device (1) comprising:

   a lens assembly (10) having multiple lenses aligned along an optical axis direction from an object-side toward an image-side; and
   a lens barrel (20) configured to at least partially surround the lens assembly,
   wherein at least one of the multiple lenses included in the lens assembly satisfies [Formula 2] below,

$$[\text{Formula 2}]$$

$$H2/D1 \geq 0.23,$$

   wherein, 'H2' indicates a height from a starting point of a non-effective diameter of the lens to a portion of the lens in contact with the inner surface of the lens barrel, and 'D1' indicates a depth from the starting point of the non-effective diameter of the lens to a starting point of a seat surface of the lens.

14. An optical device (1) comprising:

   a lens assembly (10) having multiple lenses aligned along an optical axis direction from an object-side toward an image-side; and
   a lens barrel (20) configured to at least partially surround the lens assembly,
   wherein at least one of the multiple lenses included in the lens assembly satisfies [Formula 3] below,

$$[\text{Formula 3}]$$

$$D3/D2 > 1.65,$$

   wherein 'D2' indicates a thickness between a starting point of a non-effective diameter of the lens and a seat surface of the lens, and 'D3' indicates a thickness between a first seat surface of an object-side surface of the lens and a second seat surface of an image-side surface of the lens.

15. An electronic device (1) comprising the optical device any one of claims 1 to 14.

FIG. 1

FIG. 2

FIG. 3

FIG. 4

FIG. 5

FIG. 6

FIG. 7

EP 4 361 700 A1

## INTERNATIONAL SEARCH REPORT

International application No.

**PCT/KR2023/013705**

| A. | CLASSIFICATION OF SUBJECT MATTER |
|---|---|

**G02B 13/00**(2006.01)i; **G02B 7/02**(2006.01)i

According to International Patent Classification (IPC) or to both national classification and IPC

| B. | FIELDS SEARCHED |
|---|---|

Minimum documentation searched (classification system followed by classification symbols)

G02B 13/00(2006.01); G02B 3/02(2006.01); G02B 5/00(2006.01); G02B 7/02(2006.01); G02B 7/09(2006.01); G03B 11/00(2006.01); G03B 17/00(2006.01); G03B 17/02(2006.01); H01L 27/146(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 렌즈(lens), 배럴(barrel), 스페이서(spacer), 플레어(flare) 및 전자장치(electronic device)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | EP 3936916 A1 (HUAWEI TECHNOLOGIES CO., LTD.) 12 January 2022 (2022-01-12)<br>See paragraphs [0061]-[0072] and figures 1-2. | 1-10,12-15 |
| Y | | 11 |
| Y | JP 2018-200423 A (SONY SEMICONDUCTOR SOLUTIONS CORP.) 20 December 2018 (2018-12-20)<br>See paragraphs [0034] and [0114]-[0118] and figures 1, 4, 6-10 and 12-14. | 11 |
| X | JP 2018-146878 A (KANTATSU CO., LTD.) 20 September 2018 (2018-09-20)<br>See paragraphs [0024]-[0027] and figure 1. | 13-15 |
| A | US 8292524 B1 (YU, Sheng-Jung) 23 October 2012 (2012-10-23)<br>See column 1, line 32 - column 3, line 3 and figures 1-4. | 1-15 |
| A | US 2022-0066119 A1 (LARGAN PRECISION CO., LTD.) 03 March 2022 (2022-03-03)<br>See paragraphs [0092]-[0208] and figures 1A-9B. | 1-15 |

☐ Further documents are listed in the continuation of Box C.     ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **13 December 2023** | **18 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/013705**

| Patent document cited in search report | | | Publication date (day/month/year) | Patent family member(s) | | | Publication date (day/month/year) |
|---|---|---|---|---|---|---|---|
| EP | 3936916 | A1 | 12 January 2022 | CN | 110187463 | A | 30 August 2019 |
| | | | | US | 2022-0317411 | A1 | 06 October 2022 |
| | | | | WO | 2020-216153 | A1 | 29 October 2020 |
| JP | 2018-200423 | A | 20 December 2018 | CN | 110431453 | A | 08 November 2019 |
| | | | | EP | 3631539 | A1 | 08 April 2020 |
| | | | | KR | 10-2020-0014291 | A | 10 February 2020 |
| | | | | TW | 201902206 | A | 01 January 2019 |
| | | | | TW | I759433 | B | 01 April 2022 |
| | | | | US | 11296133 | B2 | 05 April 2022 |
| | | | | US | 2020-0176496 | A1 | 04 June 2020 |
| | | | | WO | 2018-221191 | A1 | 06 December 2018 |
| JP | 2018-146878 | A | 20 September 2018 | CN | 108572424 | A | 25 September 2018 |
| | | | | CN | 208506340 | U | 15 February 2019 |
| | | | | US | 10545350 | B2 | 28 January 2020 |
| | | | | US | 2019-0049737 | A1 | 14 February 2019 |
| US | 8292524 | B1 | 23 October 2012 | None | | | |
| US | 2022-0066119 | A1 | 03 March 2022 | CN | 114200638 | A | 18 March 2022 |
| | | | | CN | 214011607 | U | 20 August 2021 |
| | | | | TW | 202208969 | A | 01 March 2022 |
| | | | | TW | I748624 | B | 01 December 2021 |

Form PCT/ISA/210 (patent family annex) (July 2022)